# EUROPEAN PATENT APPLICATION

(11) **EP 2 759 440 A2**
(43) Date of publication of application: **30.07.2014**
(21) Application number: 13161343.2
(22) Date of filing: 27.03.2013
(51) Int. Cl.: B60L 11/18

(54) **System structure of electric vehicle supply equipment, electric vehicle supply equipment, and control apparatus adapted to electric vehicle supply equipment**

(30) Priority: 25.01.2013 TW 102102793
(71) Applicant: Lite-On Technology Corporation, Taipei City 11492 (TW)
(72) Inventor: Chang, Ping-Kuang, 11494 Taipei City (TW); Chen, Chien, 11494 Taipei City (TW); Fang, Yu-Jen, 11494 Taipei City (TW); Liu, Shin-Hung, 11494 Taipei City (TW); Hu, Hsu- Peng, 11494 Taipei City (TW); Tsai, Tsung-Yuan, 11494 Taipei City (TW); Liang, Chia-Lin, 11494 Taipei City (TW)
(74) Representative: Altenburg, Bernardus Stephanus Franciscus

(57) **Abstract**

A system structure of an electric vehicle supply equipment, an electric vehicle supply equipment, and a control apparatus adapted to the electric vehicle supply equipment are disclosed. The control apparatus adapted to the electric vehicle supply equipment comprises a network switch, a first switch, a first communication connector, a second switch, and a second communication connector. The first communication connector is electrically coupled with the first switch, the first switch and the second switch are electrically coupled with the network switch respectively, and the second communication connector is electrically coupled with the second switch. When the network switch is electrically disconnected with the first switch or the second switch, the first switch and the second switch are connected directly, the packet signal is transmitted via the first switch and the second switch.

## Description

### Field

The exemplary embodiment of the present invention relates to a control apparatus. More specifically, the exemplary embodiment of the present invention relates to an electric vehicle supply equipment and a control apparatus thereof.

### Background

The number of users of electric vehicles is increasing due to the constantly developing of green technology, and the main power source of such electric vehicles comes from batteries, particularly rechargeable ones, so as to ensure a sufficient supply of power for moving.

Due to the development of network and cloud technologies, many manufacturers step in supplying the electric vehicle supply equipment (EVSE) so that electric vehicles can be charged whenever recharging is required. Thus, several EVSEs can be disposed at specific locations, such as parking lots or roadsides. In order to manage these EVSEs, the administrator of the EVSEs tends to collect and transmit related information to a remote managing server over the network so as to facilitate the information management in real time. In addition, each EVSE can also transmit the user's charging information, such as vehicle registration or charging quantity, to the remote managing server through the network.

In the EVSE system, the information flow is designed as a series structure. However, if one interconnected EVSE of the system is out of power or otherwise electrically disconnected, the information flow for the system will be interrupted. Therefore, a master-slave structure of the information flow is developed. Notably, under this master-slave structure, if the master EVSE is out of power or otherwise electrically disconnected, the whole system still cannot operate. For example, in the US public patent application US20120044843, a master-slave EVSE system is disclosed, which represents the aforementioned problem that the master charge station of said system is out of power or otherwise electrically disconnected, the slave charge station(s) will not be able to transmit information to the remote server, and hence, the whole system stop operation.

Therefore, it is necessary to provide an electric vehicle supply equipment (EVSE) and a control apparatus adapted to the electric vehicle supply equipment so as to transmit the information of other EVSEs uninterruptedly when one of the EVSEs in the whole EVSE system structure is out of power, electrically disconnected, or even breaking down.

### Summary

The main objective of the present invention is to provide a system structure of an electric vehicle supply equipment, an electric vehicle supply equipment, and a control apparatus adapted to the electric vehicle supply equipment. When any one of the EVSEs is out of power or otherwise electrically disconnected, the other EVSEs can still successfully transmit the packet signal to the remote managing server uninterruptedly.

In order to achieve the above objective, the control apparatus of the present invention is adapted to the electric vehicle supply equipment. The control apparatus comprises a network switch, a first switch, a first communication connector, a second switch, and a second communication connector.

The first switch is electrically coupled with the network switch, the first communication connector is electrically coupled with the first switch, the second switch is electrically coupled with the network switch, and the second communication connector is electrically coupled with the second switch. When the network switch is electrically disconnected with the first switch or the second switch, the first switch and the second switch are connected directly, the packet signal is transmitted via the first switch and the second switch.

It is preferred that the network switch be an Ethernet switch.

The first switch and the second switch are relays.

The first communication connector and the second communication connector are RJ-45 connectors.

Another objective of the present invention is to provide an electric vehicle supply equipment that comprises a charging apparatus and a control apparatus as described above. The control apparatus is electrically coupled with the charging apparatus so as to transmit the information captured by the charging apparatus.

In addition, the present invention further provides a system structure of an electric vehicle supply equipment comprising a remote server and a plurality of electric vehicle supply equipments (EVSEs). Each electric vehicle supply equipment is in series with the others and is connected with the remote server through a network. Every electric vehicle supply equipment includes the charging apparatus and the control apparatus described above. Thus, in the operation of the system structure of electric vehicle supply equipment according to the present invention, when any one of the EVSEs is electrically disconnected, the packet signal of the other EVSEs still can be transmitted by the control apparatus of the electrically disconnected EVSE to another EVSE. In other words, any one of the EVSEs can transmit the packet signal by the control apparatus to another EVSE or even directly to the remote server through the network.

### Brief description of the drawings

The exemplary embodiment of the present invention will be understood more fully from the detailed description given below and from the accompanying drawings of a preferred embodiment of the invention, which, however, should not be taken to limit the invention to the specific embodiment but are for explanation and understanding only.
FIG. 1 is a schematic diagram of the system structure of an electric vehicle supply equipment of the present invention.
FIG. 2 illustrates the electric vehicle supply equipment of the present invention.
FIG. 3 indicates the electric vehicle supply equipment having the control apparatus of the present invention.
FIG. 4 indicates the operation situation of the switch of the present invention.
FIG. 5 indicates the system structure of an electric vehicle supply equipment of the present invention, and the figure also indicates the operation of other electric vehicle supply equipments when any one of the electric vehicle supply equipments is electrically disconnected.

### Detailed Description

The advantages and innovative features of the invention will become more apparent from the following detailed description when taken in conjunction with the accompanying drawings.

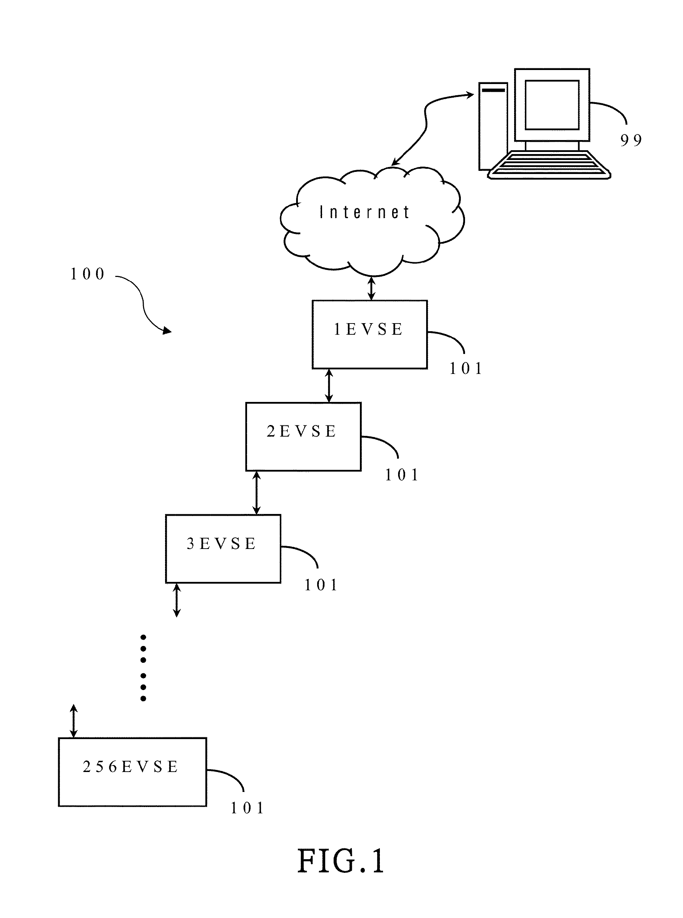

Please refer to FIG. 1, which indicates the system structure 100 of an electric vehicle supply equipment (EVSE). The system structure 100 comprises a remote server 99 and a plurality of electric vehicle supply equipments (EVSE) 101. The EVSEs of the present invention can be of the same make and model to minimize costs; however, they can also be EVSEs of different makes and models connected in a series. For facilitating the following description, the EVSEs shown in the figures are marked as 1EVSE, 2EVSE...and etc., so as to indicate the in-series first electric vehicle supply equipment 101, the second electric vehicle supply equipment 101, and so on.

Each electric vehicle supply equipment 101 is in series with the others and connected with the remote server 99 through Internet so as to achieve the transfer of information and data communication.

In a normal state, as shown in FIG. 1, all the in-series EVSEs 101 communicate with each other through the in-series connection. For example, the information of the 3EVSE is first transmitted to the 2EVSE and then transmitted to the 1EVSE, and then the information is further transmitted to the remote server 99 through the Internet for information management.

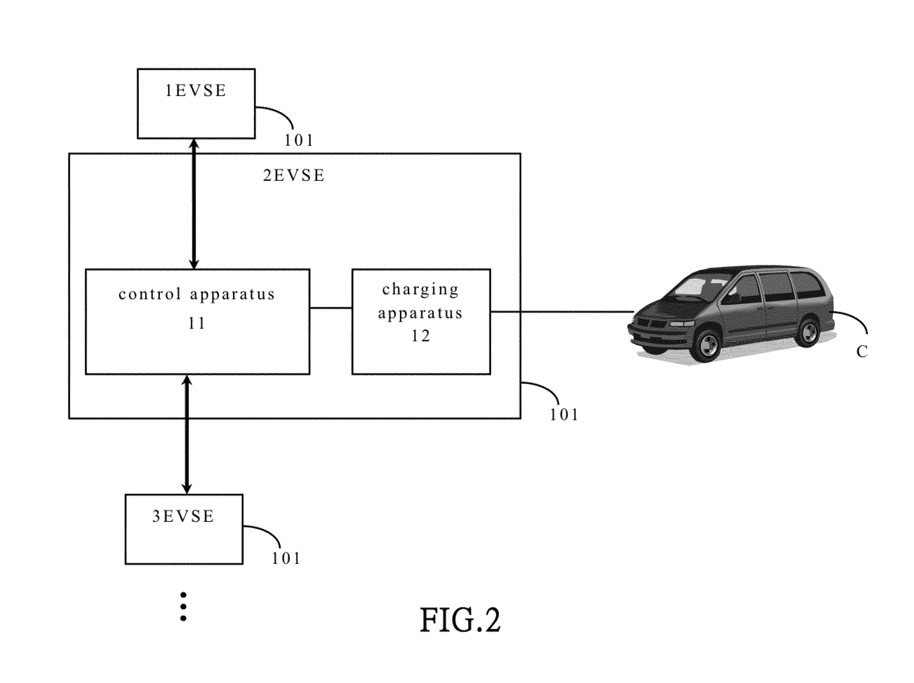

Please refer to FIG. 2. Using the 3EVSE as an example, each electric vehicle supply equipment 101 comprises a control apparatus 11 and a charging apparatus 12. The control apparatus 11 is electrically coupled with the charging apparatus 12. The charging apparatus 12 provides power to the electric vehicle C.

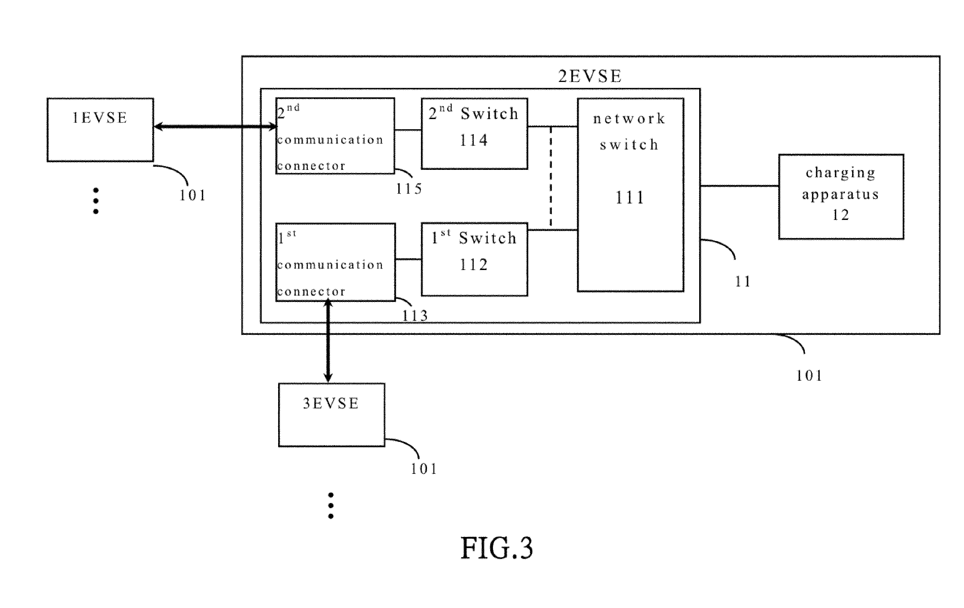

FIG. 3 further describes the control apparatus 11. The control apparatus 11 of the present invention comprises a network switch 111, a first switch 112, a first communication connector 113, a second switch 114, and a second communication connector 115.

The first switch 112 and the second switch 114 are electrically coupled with the network switch 111 respectively, the first communication connector 113 is electrically coupled with the first switch 112, and the second communication connector 115 is electrically coupled with the second switch 114.

In the normal state, taking the 2EVSE as an example, the packet signal of the 3EVSE is transmitted to the first communication connector 113 of the 2EVSE, then through the first switch 112 to the network switch 111, then through the second switch 114 to the second communication connector 115, and finally the packet signal is transmitted out to the 1EVSE. Contrariwise, the packet signal of the 1EVSE is transmitted to the second communication connector 115 of the 2EVSE, then through the second switch 114 to the network switch 111, then through the first switch 112 to the first communication connector 113, and finally the packet signal is transmitted to the second communication connector 115 of the 3EVSE, so as to achieve mutual transmission of each EVSE information.

However, when any one of the electric vehicle supply equipments 101 is electrically disconnected, another electric vehicle supply equipment 101 still can operate normally to transmit the packet signal. Referring to FIG. 3, if the 2EVSE is electrically disconnected and the network switch 111 is nonfunctional, the transmitted-in packet signal from the first communication connector 113 still can be transmitted to the second communication connector 115 through the first switch 112 and the second switch 114, which are electrically coupled mutually, and then the packet signal will be transmitted to the network switch 111 of the next 1EVSE through the second communication connector 115. Contrariwise, the packet signal of the 1EVSE is transmitted to the second communication connector 115 of the 2EVSE, then through the second switch 114 and the first switch 112 to the first communication connector 113, and finally the packet signal is transmitted to the second communication connector 115 of the 3EVSE. Even though the first switch 112 and the second switch 114 are electronically disconnected with the network switch 111, the first switch 112 and the second switch 114 can be connected with each other so as to achieve mutual transmission for each EVSE information.

It is preferred that the network switch 111 of the present invention be an Ethernet switch. The first switch 112 and the second switch 114 are relays. The first communication connector 113 and the second communication connector 115 are RJ-45 connectors. In this way, the greatest benefit can be obtained at the lowest cost; i.e., if any one of the electric vehicle supply equipments 101 is electrically disconnected, the packet signal of other electric vehicle supply equipments 101 still can be transmitted (through the Internet to the remote server 99).

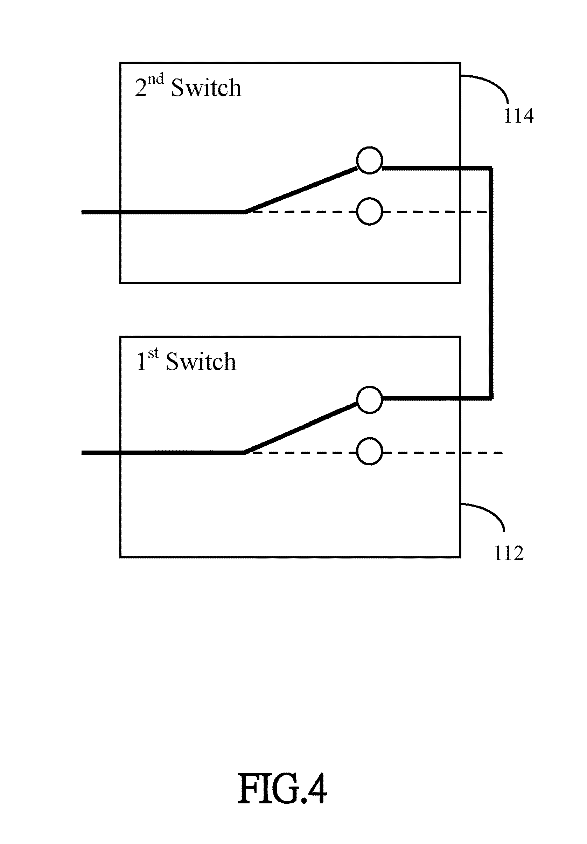

Further please refer to FIG. 4. The first switch 112 and the second switch 114 are relays. If any electric vehicle supply equipment 101 is electrically disconnected, the first switch 112 and the second switch 114 of the electrically disconnected EVSE 101 will be switched to a direct connection instead of through the network switch 111 (not shown in FIG. 4). In the normal state, the transmission flow of the packet signal is shown as the dotted line passing through the network switch 111 (not shown in FIG. 4); when the circuit opens, the first switch 112 and the second switch 114 will be switched to the solid line.

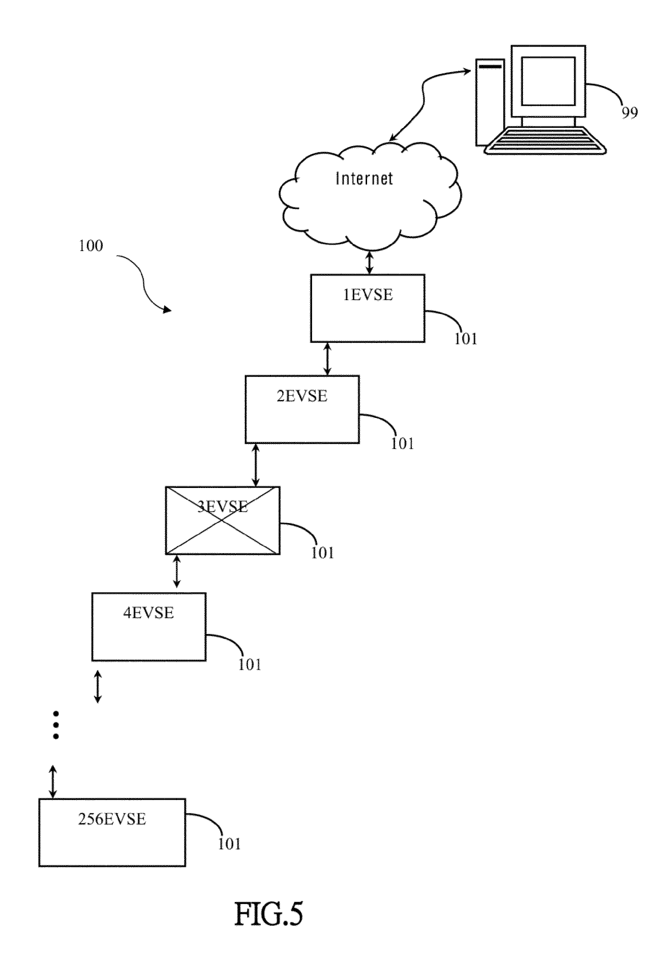

Therefore, please refer to FIG. 5. When the system structure 100 of electric vehicle supply equipment of the present invention is used, even if any one of the electric vehicle supply equipments 101 is electrically disconnected, for example the 3EVSE is electrically disconnected, the packet signal of the adjacent 4EVSE still can be transmitted to the 2EVSE by the control apparatus 11 of the 3EVSE (as shown in FIG. 2).

In other words, any one of the electric vehicle supply equipments 101 can transmit the packet signal to another electric vehicle supply equipment 101 through the control apparatus 11 of the present invention, or even the packet signal can be transmitted directly to the remote server 99 through the network.

In summary, regardless of the function, the way and result of the present invention are shown to have technical characteristics different from those of the prior arts. However, the aforementioned embodiments are only for illustrating the principle and the result of the present invention and should not be understood to limit the range of the present invention. It will be obvious to those skilled in the art that changes and modifications may be made without departing from the spirit and scope of this invention and its broader aspects. Therefore, the appended claims are intended to encompass within their scope all such changes and modifications as are within the true spirit and scope of the exemplary embodiment of the present invention.

## Claims

1. A control apparatus, adapted to an electric vehicle supply equipment (EVSE), comprising:
a packet signal;
a network switch, used for switching transmission of the packet signal;
a first switch, electrically coupled with the network switch for transmitting the packet signal;
a first communication connector, electrically coupled with the first switch for receiving the packet signal;
a second switch, electrically coupled with the network switch; and
a second communication connector, electrically coupled with the second switch;
when the first switch or the second switch is electronically disconnected with the network switch, the first switch and the second switch are connected directly, and the packet signal is transmitted via the first switch and the second switch.

2. The control apparatus as claimed in claim 1, wherein the network switch is an Ethernet switch.

3. The control apparatus as claimed in claim 1, wherein the first switch and the second switch are relays

4. The control apparatus as claimed in claim 1, wherein the first communication connector and the second communication connector are RJ-45 connectors.

5. An electric vehicle supply equipment (EVSE), comprising:
a charging apparatus, for providing power to an electric vehicle; and
a control apparatus, electrically coupled with the charging apparatus, wherein the control apparatus comprises:
a packet signal;
a network switch, used for switching transmission of the packet signal;
a first switch, electrically coupled with the network switch for transmitting the packet signal;
a first communication connector, electrically coupled with the first switch for receiving the packet signal;
a second switch, electrically coupled with the network switch; and
a second communication connector, electrically coupled with the second switch;
when the first switch or the second switch is electronically disconnected with the network switch, the first switch and the second switch are connected directly, and the packet signal is transmitted via the first switch and the second switch.

6. The electric vehicle supply equipment as claimed in claim 5, wherein the network switch is an Ethernet switch.

7. The electric vehicle supply equipment as claimed in claim 5, wherein the first switch and the second switch are relays.

8. The electric vehicle supply equipment as claimed in claim 5, wherein the first communication connector and the second communication connector are RJ-45 connectors.

9. A system structure of electric vehicle supply equipment (EVSE), comprising:
a remote server; and
a plurality of electric vehicle supply equipments (EVSE), each EVSE being in series with the others, and the plurality of EVSEs being connected with the remote server through a network, each EVSE comprising:
a charging apparatus, for providing power to an electric vehicle; and
a control apparatus, electrically coupled with the charging apparatus, wherein the control apparatus comprises:
a packet signal;
a network switch, used for switching transmission of the packet signal;
a first switch, electrically coupled with the network switch for transmitting the packet signal;
a first communication connector, electrically coupled with the first switch for receiving the packet signal;
a second switch, electrically coupled with the network switch; and
a second communication connector, electrically coupled with the second switch;
when the first switch or the second switch is electronically disconnected with the network switch in the control apparatus of any one EVSE , the first switch and the second switch disconnecting with the network are connected directly, and the packet signal is transmitted via the first switch and the second switch disconnecting with the network to next EVSE.

10. The system structure as claimed in claim 9, wherein the network switch is an Ethernet switch.

11. The system structure as claimed in claim 9, wherein the first switch and the second switch are relays.

12. The system structure as claimed in claim 9, wherein the first communication connector and the second communication connector are RJ-45 connectors.
